# EUROPEAN PATENT APPLICATION

(11) **EP 4 195 143 A1**
(43) Date of publication of application: **14.06.2023**
(21) Application number: 21213690.7
(22) Date of filing: 10.12.2021
(51) Int. Cl.: G06T 7/00

(54) **A SYSTEM AND METHOD FOR PROCESSING TEMPORAL VESSEL IMAGES**

(71) Applicant: Koninklijke Philips N.V., 5656 AG Eindhoven (NL)
(72) Inventor: VAN LAVIEREN, Martijn Anne, Eindhoven (NL); WU, Hoi San, Eindhoven (NL)
(74) Representative: Philips Intellectual Property & Standards

(57) **Abstract**

The invention provides a system and method for processing a plurality of images of a vessel, each of the vessel images representing the vessel at a different point in time, the system comprising a processor. The processor is configured to receive a reference vessel image and a comparison vessel image, wherein the comparison vessel image corresponds to the same cycle phase as the reference vessel image, to determine vessel diameter data of the reference vessel image and vessel diameter data of the comparison vessel image, and to generate an analysis output representing a temporal change based on the vessel diameter data of the reference image and the comparison image. In some embodiments, the vessel diameter data is provided as an input to a computational hemodynamic model and, using computational hemodynamic modelling, a hemodynamic impact value is determined.

## Description

### FIELD OF THE INVENTION

The present invention is directed to a system and method for processing temporal vessel image, and in particular to systems and methods for assisting the identification and/or assessment of a temporal change in vessel diameter.

### BACKGROUND OF THE INVENTION

Medical imaging techniques, such as angiography, are used to image a blood vessel to support an assessment of the health of the blood vessel. Image processing can be used to detect stenosis, by measuring the diameter of the blood vessel (i.e. the distance between opposing walls of the blood vessel in the blood vessel image). This information is used to determine if the image indicates vascular stenosis present, which can be indicative of an underlying health issue e.g. obstructive coronary artery disease.

Obstructive coronary artery disease results in a reduced flow of blood to the heart (cardiac ischemia). However, a significant proportion of patients (up to 40%) with symptoms of myocardial ischemia do not have obstructive coronary artery disease.

One of the underlying endotypes of cardiac ischemia is spasm of the epicardial arteries. Diagnosis of spasm of the epicardial arteries can be assisted by carrying out spasm provocation tests, using a spasm-inducing drug e.g. acetylcholine, followed by imaging the arteries of the heart. Vasospasm of the epicardial arteries is provoked by incrementally increasing the drug dosage. In a typical spasm-provocation procedure multiple e.g. four dosages of acetylcholine are administered in an attempt to induce vasospasm on a coronary blood vessel. An angiogram is obtained after each dose. The dosage at which spasm occurs indicates how sensitive the patient is to the drug and is a parameter of endothelial function. The image obtained before drug delivery may be visually compared with images obtained after each subsequent dose of the drug has been administered, to obtain a rough indication of whether and where the imaged blood vessel diameter has changed. However, it is challenging for healthcare providers to visually detect and quantify temporal vessel diameter changes. Spasm can occur in both the epicardial vessels and in the microvasculature. There are various challenges associated with determining whether there has been a change in diameter of the epicardial vessels. For example, a change in diameter may be in the form of multiple small focal changes, so that the imaged vessel does not appear to have a change in diameter over its length. Similarly, if the spasm is "diffuse" i.e. a small diameter change over a large portion of the vessel, the change in diameter may be difficult to see. Cardiac motion during imaging can also interfere a healthcare providers ability to detect and assess a change in vessel diameter. In practice, a change in vessel diameter that is 50% or less is unlikely to be detected visually. The difficulties associated with comparing the two angiograms mean that the temporal changes associated with the presence of vasospasm cannot be reliably detected visually .Additionally, even where diameter changes can be detected, it can be difficult to assess whether the diameter change is associated with spasm or a different hemodynamic obstruction.

Determining a change to the blood vessel diameter can support a diagnosis of vasospasm. Changes to the heart's rhythm and electrical activity (as determined by an electrocardiogram, ECG) may also be used to identify vasospasm, but does not provide any information about the degree of spasm (i.e. how severe the change in diameter is). If the ECG is abnormal, but the angiogram does not indicate upon visual assessment that there has been a change in diameter in the epicardial arteries this may indicate that there is a microvascular spasm which cannot be visually identified from the angiogram.

When vasospasm is present in the epicardial arteries, it is also challenging to determine its hemodynamic impact (i.e. how severely the vasospasm impacts blood flow). In particular, an apparently large change in blood vessel diameter does not necessarily correspond to a significant change in blood flow. This limits the ability of a healthcare provider to make an accurate assessment as to whether the underlying cause of the ischemia is the observed epicardial vasospasm.

### SUMMARY OF THE INVENTION

The invention is defined by the claims.

According to examples in accordance with an aspect of the invention, there is provided a system for processing a plurality of images of a vessel, each of the vessel images representing the vessel at a different point in time, the system comprising:
a processor configured to:
   receive a reference vessel image and a comparison vessel image, wherein the comparison vessel image corresponds to the same cycle phase as the reference vessel image;
   determine vessel diameter data of the reference vessel image and vessel diameter data of the comparison vessel image; and
   generate an analysis output representing a temporal change based on the vessel diameter data of the reference vessel image and the vessel diameter data of the comparison vessel image.

The vessel may be a blood vessel and the cycle phase may be a cardiac cycle phase. The vessel may be a vessel of the airways of the respiratory system and the cycle phase may be of the breathing cycle. The vessel may be a vessel of the human anatomy that is naturally subjected to cyclical motion (e.g. by heartbeat, breathing) or which can artificially be subjected to cyclical motion (e.g. by cyclical pumping or exerting pressure).

For exemplary description it is further referred to blood vessel, however, the embodiments disclosed are contemplated for other vessels mentioned in the above paragraph.

The reference blood vessel image may be obtained before a spasm-inducing drug has been administered. The comparison blood vessel image may be obtained after the spasm inducing drug has been delivered. The reference blood vessel image and the comparison blood vessel image are processed to determine blood vessel diameter data associated with the blood vessel represented in each image. Generating an analysis output, such as an image or a graph, based on the two blood vessel diameter data from the two images can facilitate the identification of a temporal change in the blood vessel. Analyzing the blood vessel images in this way can help to support a diagnosis of coronary artery disease. In particular, it can help to reliably identify diameter changes. By generating an analysis output, the system can assist a user in determining if delivery of a dose has resulted in a spasm. Further, the system can assist a user in diagnosing and assessing vasospasm e.g. the degree, pattern, and location (e.g. epicardial and/or microvascular) of the spasm. This can help a healthcare provider to discriminate between narrowing of the blood vessels due to spasm and narrowing of the blood vessels as a result of a different hemodynamic obstruction.

The processor may be configured to compare the blood vessel diameter data of the reference blood vessel image and the blood vessel diameter data of the comparison blood vessel image to determine a change in diameter, or another parameter based on the change in diameter (e.g. blood vessel diameter of the comparison image as a percentage of the blood vessel diameter in the reference image, "% spasm").

The processor may be further configured to model blood flow through the blood vessel using a hemodynamic computational model, wherein modelling blood flow through the blood vessel comprises:
providing the blood vessel diameter data of the reference blood vessel image as an input to the hemodynamic computational model, to model blood flow according to the reference blood vessel image;
providing the blood vessel diameter data of the comparison blood vessel image as an input to the computational hemodynamic model, to model blood flow through the blood vessel according to the comparison blood vessel image; and
determining a hemodynamic impact value associated with the comparison blood vessel image;
wherein the processor is configured to generate the analysis output based on the hemodynamic impact value.

Using blood vessel diameter data as an input to the computational hemodynamic model may make it possible to more accurately quantify the hemodynamic impact of administering a dose of spasm-inducing drug and/or of an induced spasm. In this way, the system can assist a user in determining if delivery of a dose has resulted in a spasm (and therefore how sensitive the user is to the drug). This can also assist a user in diagnosing vasospasm e.g. it aids assessment of the degree, pattern (diffuse/focal), hemodynamic impact and location (e.g. epicardial and/or microvascular). Further, when the dose does result in a spasm, the system can assist in assessing the impact of the spasm on blood flow. The hemodynamic impact value may be, for example, a coronary physiology hyperemic parameter such as Fractional Flow Reserve (FFR), or resting parameters like the instantaneous wave-Free Ratio (iFR) to quantify the hemodynamic change.

The processor may be further configured to process the reference image and the comparison image to determine the location and/or to quantify the degree of spasm associated with the comparison image. To quantify the degree of spasm, the processor may determine a relative change in the diameter of the blood vessel (e.g. % spasm), the absolute change in diameter of the blood vessel (Δd), the relative change in the length over which spasm occurs, and/or the absolute change in the length over which spasm occurs. The processor may determine the location and/or quantify the degree of focal spasm. The processor may determine the location and/or quantify the degree of diffuse spasm. It can be particularly challenging to identify the presence of a diffuse spasm visually. Because a diffuse spasm is spread over the length of the vessel, it is more difficult to identify that the vessel has changed diameter.

The processor may be further configured to process the reference image and the comparison image to determine the location and quantify the degree of diffuse and/or focal spasm associated with the comparison image.

The processor may be further configured to determine a spasm characteristic value representing the amount of focal spasm compared to diffuse spasm in the comparison image. Quantifying the amount of focal spasm compared to diffuse spasm for two blood vessel images, obtained at different times, can support a healthcare provider in determining whether a spasm is present and what the hemodynamic impact of the spasm is. In particular, this can help a healthcare provider to detect spasm earlier in the diagnostic procedure and determine whether vasospasm is a likely cause of ischemia.

Determining blood vessel diameter data may comprise determining a blood vessel diameter associated with each image.

The blood vessel diameter data may comprise a luminal profile, the luminal profile comprising a plurality of blood vessel diameter measurements at a respective plurality of locations along the blood vessel. The processor may be configured to generate the analysis output based on the hemodynamic impact values along the longitudinal axis of the vessel.

The blood vessel diameter profile may comprise diameter measurements at different locations along the blood vessel (i.e. it provides a luminal profile of the blood vessel). Accordingly, comparing the blood vessel diameter data provides a comparison of the blood vessel along its length, over time.

The analysis output may comprise a display signal for displaying a blood vessel analysis image comprising an overlay of the reference blood vessel image and the comparison blood vessel image. Providing the blood vessel analysis image as an overlay of the reference blood vessel image and the comparison blood vessel image, together with information representing the temporal change can help to assist the healthcare provider to identify and/or assess a temporal change in the blood vessel diameter.

The processor may be configured to generate an analysis indicator for quantifying the temporal change, and the blood vessel analysis image further comprises the analysis indicator. Generating an image representing the blood vessel, and which includes the analysis indicator, can assist a viewer to identify and analyze the temporal change.

The analysis output may comprise a display signal for displaying a diagram representing vessel diameter over time.

The analysis output may comprise a display signal for displaying a diagram representing hemodynamic impact over time.

The processor may be configured to receive a plurality of blood vessel images and to select the reference blood vessel image and the comparison blood vessel image from the plurality of blood vessel images.

The system may be configured to automatically detect which blood vessel images represent the blood vessel in the same cardiac heart phase, and to select a pair of blood vessel images on that basis.

The plurality of blood vessel images may be angiogram images, and the processor is configured to carry out a segmentation process to segment the representation of the blood vessel and to provide the segmented images as the reference blood vessel image and the comparison blood vessel image.

Accordingly, the reference blood vessel image and the comparison blood vessel image may be segmented angiogram images.

According to an aspect of the invention, there is provided a computer-implemented method of analyzing a plurality of images of a blood vessel, each of the blood vessel images representing the blood vessel at a different point in time, the method comprising:
receiving a reference blood vessel image and a comparison blood vessel image, wherein the comparison blood vessel image corresponds to the same cardiac cycle phase as the reference blood vessel image;
determining blood vessel diameter data of the reference blood vessel image and blood vessel diameter data of the comparison blood vessel image; and
generating an analysis output representing a temporal change based on the blood vessel diameter data of the reference image and the comparison image.

The method may comprise modeling blood flow through the blood vessel using a hemodynamic model, wherein modelling blood flow through the blood vessel comprises:
providing the blood vessel diameter data of the reference blood vessel image as an input to the computational hemodynamic model to model blood flow according to the reference blood vessel image;
providing the blood vessel diameter data of the comparison blood vessel image as an input to the computational hemodynamic model to model blood flow through the blood vessel according to the comparison blood vessel image; and
determining a hemodynamic impact value associated with the comparison blood vessel image; and
the method further comprises generating the analysis output based on the hemodynamic impact value.

The method may further comprise processing the reference image and the comparison image to quantify an amount of diffuse spasm associated with the comparison image, processing the reference image and the comparison image to quantify an amount of focal spasm associated with the comparison image and/or determining a spasm characteristic value representing the amount of focal spasm compared to diffuse spasm in the comparison image.

Determining blood vessel diameter data may comprise determining a blood vessel diameter associated with each image. The blood vessel diameter profile may comprise diameter measurements at different locations along the blood vessel (i.e. it provides a luminal profile of the blood vessel). The analysis output may comprise a display signal for displaying a blood vessel analysis image comprising an overlay of the reference blood vessel image and the comparison blood vessel image.

The method may comprise generating an analysis indicator for quantifying the temporal change, and the blood vessel analysis image further comprises the analysis indicator. The analysis output may comprise a display signal for displaying a diagram representing vessel diameter over time. The analysis output may comprise a display signal for displaying a diagram representing hemodynamic impact over time.

The method may comprise receiving a plurality of blood vessel images and to select the reference blood vessel image and the comparison blood vessel image from the plurality of blood vessel images.

The method may comprise automatically detecting which blood vessel images represent the blood vessel in the same cardiac heart phase, and to select a pair of blood vessel images on that basis.

The plurality of blood vessel images may be angiogram images, and the method may comprise carrying out a segmentation process to segment the representation of the blood vessel and to provide the segmented images as the reference blood vessel image and the comparison blood vessel image.

According to an aspect of the invention, there is provided a computer program product comprising instructions which, when the program is executed by a computer, cause the computer to carry out the above-described method.

These and other aspects of the invention will be apparent from and elucidated with reference to the embodiment(s) described hereinafter.

### BRIEF DESCRIPTION OF THE DRAWINGS

For a better understanding of the invention, and to show more clearly how it may be carried into effect, reference will now be made, by way of example only, to the accompanying drawings, in which:
Figure 1 is a schematic diagram illustrating a system according to an embodiment of the invention;
Figure 2 is a schematic diagram illustrating the function of the processor of Figure 1, according to an embodiment of the invention;
Figure 3 is a schematic diagram illustrating a diagram according to an exemplary analysis output;
Figure 4 is a schematic diagram illustrating the function of the processor of Figure 1, according to another embodiment of the invention; and
Figure 5 is a schematic diagram illustrating an image according to an exemplary analysis output based on a hemodynamic impact value.

### DETAILED DESCRIPTION OF THE EMBODIMENTS

The invention will be described with reference to the Figures.

It should be understood that the detailed description and specific examples, while indicating exemplary embodiments of the apparatus, systems and methods, are intended for purposes of illustration only and are not intended to limit the scope of the invention. These and other features, aspects, and advantages of the apparatus, systems and methods of the present invention will become better understood from the following description, appended claims, and accompanying drawings. It should be understood that the Figures are merely schematic and are not drawn to scale. It should also be understood that the same reference numerals are used throughout the Figures to indicate the same or similar parts.

The invention provides a system for processing a plurality of images of a blood vessel, each of the blood vessel images representing the blood vessel at a different point in time. The system includes a processor 101 configured to receive a reference blood vessel image (obtained at a time t₀) 103 and a comparison blood vessel image (obtained at a time tₙ, where tₙ > t₀) 105. The comparison blood vessel image 105 corresponds to the same cardiac cycle phase as the reference blood vessel image 103. After receiving the images, the processor 101 determines blood vessel diameter data associated with each image. The processor 101 generates an analysis output 106, based on the blood vessel diameter data. The analysis output 106 represents a temporal change in the blood vessel. By obtaining the blood vessel diameter data for the two images and providing an analysis output representing a temporal change in the blood vessel, the system can facilitate convenient and accurate identification of the temporal change relating to the blood vessel diameter (e.g. a change in the blood vessel diameter and/or a change in a hemodynamic impact quantity resulting from a change is blood vessel diameter).

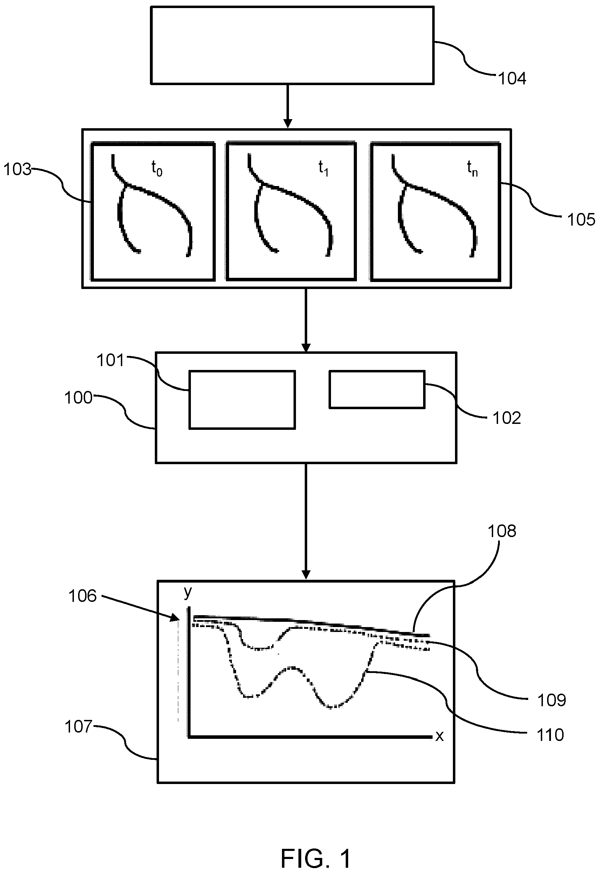

The system of Figure 1 includes a computer 100 comprising a processor 101 and a memory 102. The computer 100 receives a plurality of blood vessel images from an imaging system 104 and stores them in the memory 102. The processor 101 carries out an image segmentation process on the plurality of images, to segment the representation of the blood vessel in each of the images. Next, a reference image is selected from the plurality of segmented blood vessel images (the selection is either by the user or performed automatically by the processor). After the reference blood vessel image 103 has been selected from the plurality of segmented images, the processor 101 automatically determines which of the remaining blood vessel images corresponds to the same cardiac cycle phase as the reference blood vessel image 103. The image determined to correspond to the same cardiac cycle phase as the reference blood vessel image 103 is the comparison image 105. The processor 101 analyses the reference blood vessel image 103 and the comparison blood vessel image 105 to obtain a respective luminal profile. That is, each image is processed to determine a measured blood vessel diameter at a number of locations along the blood vessel. The processor 101 determines a luminal profile for each image, generates an analysis output 106 and sends the analysis output 106 to a display 107 configured to display the analysis output 106. In Figure 1, the analysis output 106 is a display signal for causing a display device to display a diagram representing the luminal profiles. The vertical (y) axis of the diagram represents the vessel diameter and the horizontal axis (x) represents the length of the blood vessel or of a segment of the blood vessel. A reference curve 108 represents the blood vessel diameter data of the reference blood vessel image 103. A comparison curve 109 represents the blood vessel diameter data of the reference blood vessel image 105. Accordingly, the diagram represents a temporal change in the luminal profile of the blood vessel; it shows how the diameter of the blood vessel, along its length, changes with time. With the system of Figure 1, the luminal profile of each image can be accurately and conveniently compared to determine whether the blood vessel diameter has changed in the elapsed time (from t₀ to tₙ), even when the change in diameter appears to be small or is not apparent from manually reviewing the images.

The system of Figure 1 can be used to facilitate an assessment of what effect the administration of a dose of a spasm-inducing drug has had on a patient. A reference blood vessel image 103 is obtained before the dose has been administered, at a time t₀, and a plurality of images are obtained after the dose has been delivered (at t₁...tₙ...tₙ₊₁...). A comparison blood vessel image 103 is selected by selecting an image from the plurality of images that corresponds to the same cardiac cycle phase as the reference blood vessel image 103. By obtaining blood vessel diameter data from an image obtained before and after a dose of the drug has been administered, and providing an analysis representing a temporal change in the blood vessel diameter data, the system can assist a user in accurately determining the effect of the drug dose on the patient. The processor 101 may be configured to select and process multiple comparison blood vessel images, each comparison blood vessel image corresponding to the same cardiac cycle phase as the reference blood vessel image, wherein each comparison image is obtained subsequently to the administration of a further dose of the spasm-inducing drug. In such embodiments, the analysis output 106 represents multiple temporal changes. For example, the diagram in Figure 1 may comprise a luminal profile curve for each comparison blood vessel image, such as 109 for the first dose and 110 for the second dose.

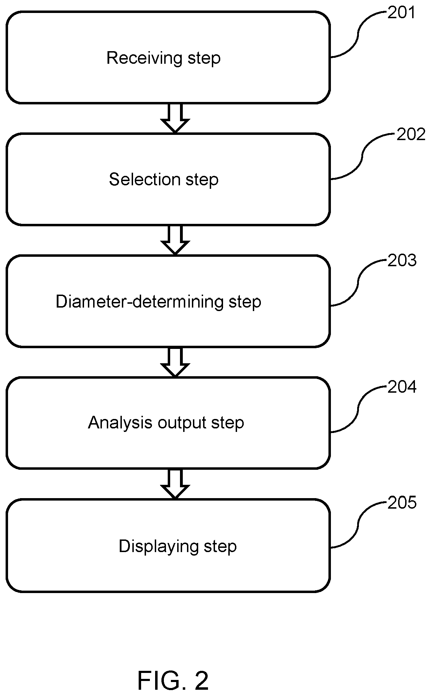

Figure 2 illustrates the function of the processor 101 of Figure 1. In a receiving step 201, the processor receives a plurality of blood vessel images and segments the images to provide a plurality of segmented blood vessel images. Next, in a selection step 202, the processor selects, from the segmented blood vessel images, a reference blood vessel image (obtained at a time t₀) and a comparison blood vessel image (obtained at a time tₙ) that corresponds to the same cardiac cycle phase as the reference image. The processor carries out a diameter-determining step 203, in which a luminal profile is determined for each of the reference blood vessel image and the comparison blood vessel image. An analysis output is generated (step 204), based on the luminal profiles and output as a display signal (step 205) for displaying luminal profiles.

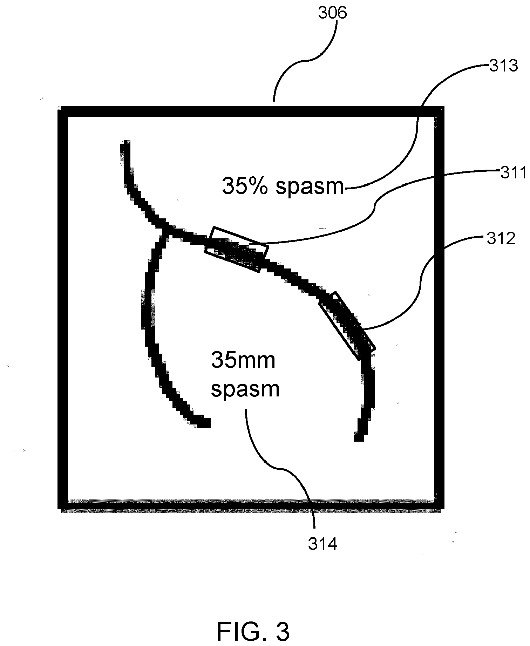

Figure 3 is a schematic diagram illustrating an image according to an exemplary analysis output. In Figure 3, the analysis output 306 is a display signal for displaying a blood vessel analysis image comprising an analysis indicator 311, 312, 313, 314. In embodiments in which the processor is configured to generate an analysis output corresponding to an image comprising an analysis indicator, the processor compares the blood vessel diameter data of the reference blood vessel image and the blood vessel diameter data of the comparison blood vessel image to determine a temporal change (e.g. % spasm, absolute change in vessel diameter) between the images. The determined temporal change can be represented by the analysis indicator in combination with the blood vessel analysis image.

The blood vessel analysis image may comprise an overlay of the reference blood vessel image 103 and the comparison blood vessel image 105. Providing the overlaid image can help to facilitate the identification of a temporal change in diameter.

In some embodiments, the analysis indicator comprises a graphic marker (as depicted by the rectangles 311, 312 in Figure 3) arranged to highlight a part of the blood vessel where there has been a temporal change in the blood vessel diameter. The graphic marker may serve to indicate a portion of the blood vessel over which spasm has occurred (without specifying an absolute value) in order to indicate the location and length of spasm in the image. In some embodiments, a graphic marker could be used to indicate the location and change in diameter associated with spasm. The analysis indicator may alternatively or additionally comprise textual information 313, 314, indicating a temporal change based on the blood vessel diameter data. As shown in Figure 3, the analysis indicator may represent the % spasm of a region of the blood vessel and/or the absolute amount by which a region of the blood vessel has narrowed. Any of the analysis indicators 311, 312, 313, 314 may be displayed either separately or in any combination, together with either of the reference blood vessel image 103 and the comparison blood vessel image 105, or alternatively together with the overlayed reference blood vessel image 103 and comparison blood vessel image 105.

The processor of Figure 1 may be configured to provide an analysis output 306 for displaying a blood vessel analysis image as described above in addition to, or as an alternative to, the analysis output described in connection with Figure 1. The above-described analysis indicator may be provided in combination with a diagram of the type described in connection with Figure 1 and/or the blood vessel analysis image described in connection with Figure 3.

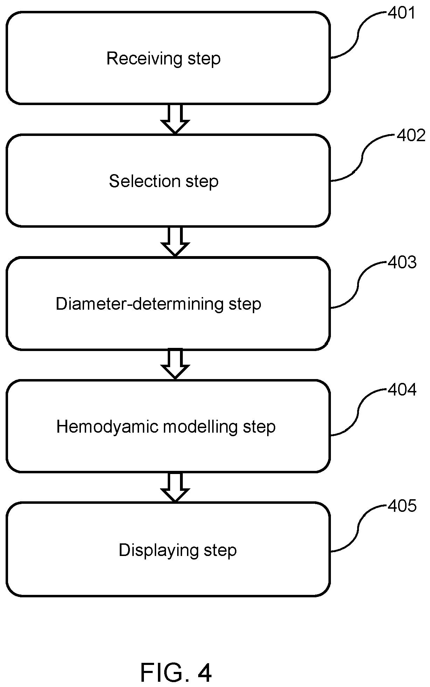

Figure 4 is a schematic diagram illustrating the function of the processor of Figure 1, according to another embodiment of the invention. In a receiving step 401, the processor receives a plurality of blood vessel images and segments the images to provide a plurality of segmented blood vessel images. Next, in a selection step 402, the processor selects, from the segmented blood vessel images, a reference blood vessel image (obtained at a time t₀) and a comparison blood vessel image (obtained at a time tₙ) that corresponds to the same cardiac cycle phase as the reference image. The processor carries out a diameter-determining step 403, in which a luminal profile is determined for each of the reference blood vessel image and the comparison blood vessel image. The processor is configured to perform hemodynamic modelling (step 404), according to a hemodynamic modelling instructions stored in the memory. The computational hemodynamic modelling may model the flow of blood through the blood vessel using computation fluid dynamic model. The processor provides the luminal profile data as an input to the computational hemodynamic model. Additional patient data (e.g. age, blood pressure, heart rate) may be input by a user. By carrying out hemodynamic modelling based on the luminal profile data obtained from the reference blood vessel image and the comparison blood vessel image, the processor determines a hemodynamic impact value associated with the comparison blood vessel image (e.g. a hemodynamic impact value associated with administering a dose of spasm-inducing drug to the patient). In a displaying step 405, the processor outputs a display signal for displaying information, based on the hemodynamic impact value, on a display device. By performing hemodynamic modelling on the blood vessel on images corresponding to before and after a spasm-inducing drug has been administered, the system can assist a user to accurately determine if delivery of the drug has resulted in a spasm. Further, when the dose does result in a spasm, the system can assist in assessing the impact of the spasm on blood flow.

The hemodynamic impact value may comprise a fractional flow reserve (FFR) associated with the comparison blood vessel image. The hemodynamic impact value may comprise an instantaneous wave-free ratio (iFR) associated with the comparison blood vessel image.

In some embodiments, the hemodynamic impact value quantifies an amount of diffuse spasm associated with the comparison image. Diffuse spasm can be particularly challenging to identify. A small diameter change that is spread over the length of the vessel can have a significant hemodynamic impact. At the same time, it is difficult to identify a small diameter change by manually comparing two blood vessel images.

In some embodiments, the hemodynamic impact value quantifies an amount of focal spasm associated with the comparison image. In particular, the processor may be configured to determine a spasm characteristic value representing the amount of focal spasm compared to diffuse spasm in the comparison image and to output the quantified amount as the hemodynamic impact value. For example, the spasm characteristic value may be the ratio of diffuse spasm to focal spasm. Determining and providing this information can support a healthcare provider in determining whether a spasm is present and what the hemodynamic impact of the spasm is.

The processor may be configured to determine and output any combination of the above-described hemodynamic impact values.

In some embodiments, the analysis output generated in the displaying step 405 may comprise a display signal for displaying a diagram or a blood vessel analysis image representing the hemodynamic impact value.

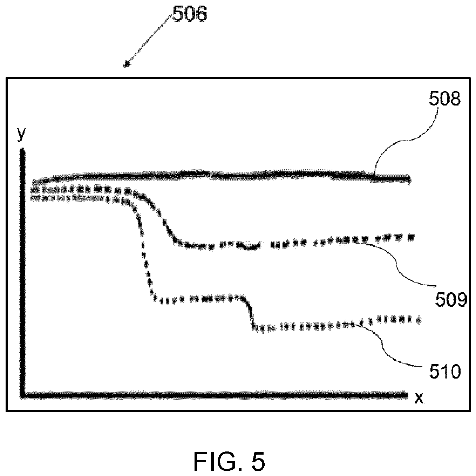

Figure 5 is a schematic diagram illustrating an exemplary analysis output based on a hemodynamic impact value. In Figure 5, the analysis output 506 is a diagram representing hemodynamic impact as a function of vessel length. The vertical (y) axis of the diagram represents the hemodynamic impact and the horizontal axis (x) represents the length of the blood vessel. A reference curve 508 plots hemodynamic impact value data obtained from the reference blood vessel image (obtained at time t₀). A comparison curve 509 represents the hemodynamic impact value data obtained from the comparison blood vessel image (obtained at time tₙ). Accordingly, the diagram represents a temporal change in the hemodynamic impact value. The processor 101 may be configured to select and process multiple comparison blood vessel images, each comparison blood vessel image corresponding to the same cardiac cycle phase as the reference blood vessel image, wherein each comparison image is obtained subsequently to the administration of a further dose of the spasm-inducing drug. In such embodiments, the analysis output 506 represents multiple temporal changes. For example, the diagram in Figure 5 may comprise multiple curves of hemodynamic impact as a function of vessel length corresponding to the reference blood vessel image, comparison blood vessel image for the first dose and comparison blood vessel image for the second dose, denoted with 508, 509 and 510 respectively.

The processor may further be configured to determine the hemodynamic impact value as a ratio of the iFR an FFR due to spasm after administration of a first dose or any subsequent dose. Alternatively or additionally, the processor may be configured to output a difference between the ratios of the iFR and FFR for the reference blood vessel image and comparison blood vessel image, or for the reference blood vessel image and any comparison blood vessel image corresponding to administration of a subsequent dose.

Variations to the disclosed embodiments can be understood and effected by those skilled in the art in practicing the claimed invention, from a study of the drawings, the disclosure and the appended claims. In the claims, the word "comprising" does not exclude other elements or steps, and the indefinite article "a" or "an" does not exclude a plurality.

Although in the embodiment described in connection with Figure 1 refers to the reference image and the comparison image being selected automatically, it will be appreciated that the selection could be performed by a user and provided to the processor as a user input.

Although in the embodiments described above the processor carries out image segmentation to segment the blood vessel from the blood vessel image, the computer may instead receive the blood vessel images as segmented blood vessel images, in which case no further segmenting of the blood vessel images is required.

Although Figure 3 shows a blood vessel analysis image comprising an analysis indicator, it will be appreciated that in some embodiments the analysis indicator need not be present.

When the blood vessel analysis image comprises a graphic marker, the marker may be different to those shown in the Figures. For example, the graphic marker may have a different shape (such as elliptical, arrow-shaped, etc.). Alternatively, the marker may serve to highlight a portion of the analysis image in a contrasting color.

A single processor or other unit may fulfill the functions of several items recited in the claims.

The mere fact that certain measures are recited in mutually different dependent claims does not indicate that a combination of these measures cannot be used to advantage.

A computer program may be stored/distributed on a suitable medium, such as an optical storage medium or a solid-state medium supplied together with or as part of other hardware, but may also be distributed in other forms, such as via the Internet or other wired or wireless telecommunication systems.

If the term "adapted to" is used in the claims or description, it is noted the term "adapted to" is intended to be equivalent to the term "configured to".

Any reference signs in the claims should not be construed as limiting the scope.

## Claims

1. A system for processing a plurality of images of a vessel, each of the vessel images representing the vessel at a different point in time, the system comprising:
a processor configured to:
receive a reference vessel image and a comparison vessel image, wherein the comparison vessel image corresponds to the same cycle phase as the reference vessel image;
determine vessel diameter data of the reference vessel image and vessel diameter data of the comparison vessel image; and
generate an analysis output representing a temporal change based on the vessel diameter data of the reference vessel image and the vessel diameter data of the comparison vessel image.

2. The system of claim 1, wherein the processor is further configured to process the reference vessel image and the comparison vessel image to determine a location of spasm and/or to quantify a degree of spasm associated with the comparison image.

3. The system of claim 2, wherein the processor is further configured to process the reference vessel image and the comparison vessel image to determine the location of spasm and to quantify the degree of diffuse and/or focal spasm associated with the comparison vessel image.

4. The system of claim 3, wherein the processor is configured to determine a spasm characteristic value representing the amount of focal spasm compared to diffuse spasm in the comparison image.

5. The system of any preceding claim, wherein determining vessel diameter data comprises determining a vessel diameter associated with each image.

6. The system of any preceding claim, wherein the vessel diameter data comprises a luminal profile, the luminal profile comprising a plurality of vessel diameter measurements at a respective plurality of locations along the vessel.

7. The system of any preceding claim, wherein the analysis output comprises a display signal for displaying a vessel analysis image on a display.

8. The system of claim 7, wherein the vessel analysis image comprises an overlay of the reference vessel image and the comparison vessel image.

9. The system of claim 7 or 8, wherein the processor is configured to generate an analysis indicator for quantifying the temporal change, and the vessel analysis image further comprises the analysis indicator.

10. The system of any preceding claim, wherein the analysis output comprises a display signal for displaying a diagram representing vessel diameter overtime.

11. The system of any preceding claim, wherein the processor is configured to receive a plurality of vessel images and to select the reference vessel image and the comparison vessel image from the plurality of vessel images.

12. The system of any preceding claim, wherein the plurality of vessel images are angiogram images, and the processor is configured to carry out a segmentation process to segment the representation of the vessel and to provide the segmented images as the reference vessel image and the comparison vessel image.

13. The system of any of the preceding claims, wherein the processor is further configured to model blood flow through the vessel using a computational hemodynamic model, by being configured to:
provide the blood vessel diameter data of the reference blood vessel image as an input to the computational hemodynamic model to model blood flow according to the reference blood vessel image;
provide the blood vessel diameter data of the comparison blood vessel image as an input to the computational hemodynamic model to model blood flow through the blood vessel according to the comparison blood vessel image;
determine a hemodynamic impact value associated with the comparison blood vessel image; and
wherein the processor is configured to generate the analysis output based on the hemodynamic impact value.

14. The system of claim 13, wherein the analysis output comprises a display signal for displaying a representation of the hemodynamic impact, preferably a diagram representing the hemodynamic impact along a segment of the vessel.

15. A computer-implemented method of analyzing a plurality of images of a vessel, each of the vessel images representing the vessel at a different point in time, the method comprising:
receiving a reference vessel image and a comparison vessel image, wherein the comparison vessel image corresponds to the same cycle phase as the reference vessel image;
determining vessel diameter data of the reference vessel image and vessel diameter data of the comparison vessel image; and
generating an analysis output representing a temporal change based on the vessel diameter data of the reference image and the comparison vessel image.
